# EUROPEAN PATENT SPECIFICATION

(11) **EP 2 841 246 B1**
(45) Date of publication and mention of the grant of the patent: **27.07.2016**
(21) Application number: 12735622.8
(22) Date of filing: 27.04.2012
(51) Int. Cl.: B32B 5/20, B32B 1/02, B65D 65/46, C08J 9/228, C08J 9/32, B32B 27/06, B32B 27/36, B29C 44/06

(54) **ARTICLE COMPRISING FOAMED POLYLACTIC ACID AND PROCESS OF MAKING THE SAME**
ARTIKEL AUS GESCHÄUMTER POLYMILCHSÄURE UND VERFAHREN ZUR HERSTELLUNG DAVON
ARTICLE COMPRENANT DE L'ACIDE POLYLACTIQUE SOUS FORME DE MOUSSE ET PROCÉDÉ DE FABRICATION ASSOCIÉ

(43) Date of publication of application: 04.03.2015
(73) Proprietor: Compagnie Gervais Danone, 75009 Paris (FR)
(72) Inventor: BEAL, Cédric, F-74140 Messery (FR); CHIVRAC, Frédéric, F-13090 Aix-en-Provence (FR); JACOB, Anne-Flore, F-74140 Sciez (FR)
(74) Representative: Cabinet Plasseraud
(86) International application number: PCT/IB2012/001188
(87) International publication number: WO 2013/160717

(56) References cited:
- US-A1- 2007 087 131
- US-A1- 2012 053 256

## Description

The invention concerns an article comprising foamed polylactic acid and a process of making the same. The article can be used in the field of packaging.

Polylactic Acid (PLA) is a thermoplastic polymer made from renewable resources. It has a significant biodegradability. PLA plastic sheets are used to make thermoformed containers. There is however a need for lowering amount of material used in packaging, without significantly impacting mechanical properties or other properties.

A solution to lower the amount of materials is to incorporate in thermoplastic materials, for example in polystyrene, foaming agents that generate gas upon heating. Examples of such foaming agents include an association of citric acid and sodium bicarbonate that react together upon heating and generate carbon dioxide gas and water. Such foaming agents are found unpractical in PLA because water causes a hydrolysis of PLA and thus can deteriorate the mechanical and/or rheological properties, and/or because the gas generates a significant viscosity drop that is difficult to manage in industrial processes: for example a non-regular flow is observed, that requires a constant observation and adaptation of the process. This is even more difficult to manage in preparation of multilayer materials. Additionally much material might be rebutted before the process is not stabilized, and thus wasted.

Document CN101899167 discloses the incorporation of expandable microspheres in PLA to prepare foamed PLA monolayer sheets. However such sheets are hardly adapted to some packaging applications such as food applications because the foamed structure does not provide a barrier to some agents, for example to contaminants or to agents that can alter food products such as oxygen. There is a need for other articles.

The invention addresses at least one of the problems or needs above with an article comprising a multilayer plastic material comprising at least:
A) one layer A of a thermoplastic material different from foamed polylactic acid,
B) one layer B of a foamed polylactic acid material comprising polylactic acid and expanded microspheres.

The invention also concerns processes that are adapted to prepare the articles. The invention also concerns the use of expandable microspheres in multilayer articles comprising a PLA layer.

It has been surprisingly found that the expandable microspheres allow a good processability of the layers, especially of a PLA layer to be foamed. It has been surprisingly found that it was possible to obtain articles with good mechanical properties such as compression resistance and/or other properties such as snapability.

### Definitions

In the present application a non-foamed polylactic acid (PLA) material refers to polylactic acid substantially depleted of gas inclusions, either directly in the PLA or in microspheres embedded in the PLA. Non-foamed PLA has typically a density of higher than 1.2. Non-foamed PLA is also referred to as "compact PLA". In the present application a foamed polylactic acid (PLA) material refers to polylactic acid comprising gas inclusions, either directly in the PLA or preferably in microspheres embedded in the PLA. Foamed PLA has typically a density of up to 1.2, preferably of at less than 1.2, preferably of up to 1.1.

In the present application snapability refers to the ability of a layered material to be divisible along a precut line under flexural solicitation.

In the present application "additives" refer to products that can be added to polylactic acid or other thermoplastic materials, different from products comprising expandable or expanded microspheres.

### Article structure - Sheets

The article of the invention is a multilayer plastic material, preferably thermoplastic material, comprising at least:
A) one layer A of a thermoplastic material different from foamed polylactic acid,
B) one layer B of a foamed polylactic acid material comprising polylactic acid and expanded microspheres.

The material of layer A can be referred to as "Material A". The material of layer B can be referred to a "Material B".

Layer A is typically of a non-foamed polylactic acid. Material A is typically a compact polylactic acid material, optionally comprising additives. The additive content in Material A can be for example of from 0% to 10% by weight, preferably of from 0.1% to 5%.

Material B is a foamed polylactic acid material comprising expanded microspheres, and optionally additives. The additive content in Material B can be for example of from 0% to 10% by weight, preferably of from 0% to 5%. In an interesting embodiment Material B does not comprise additives. It had been surprisingly found that material B could be used without adding further additives.

It is mentioned that in a preferred embodiment the polylactic acid material comprises from 0% to 0.15% by weight, preferably from 0% to 0.1%, of cross-linking agents, typically added after polymerization, such as peroxides. In a most preferred embodiment the polylactic acid material does not comprise such cross-linking agents. It has been surprisingly found that such cross-linking agents are useless.

In one embodiment the article is a plastic sheet or a film. It has typically a thickness e. It has typically two other dimensions such as a length I and a broadness b. Typically both other dimensions I and b are at least 10 times, preferably 100 times the thickness. The plastic sheet or film can typically have a thickness of from 0.1 mm to 5 mm, preferably 0.5 mm to 2 mm, preferably from 0.6 mm to 1 mm. Examples of thicknesses are 0.5 mm, or 0.7 mm, or 0.8 mm, or 0.9 mm, or 1 mm. The broadness can be typically of from 20 cm to 200 cm. The length can be of at least 200 cm. The plastic sheets can be presented as rolls.

In one embodiment the article is a container. The container can be a thermoformed article, preferably obtained from the plastic sheet. The container typically comprises at least a part corresponding to the multilayer structure. It can comprise a stretched part and a non-stretched part. The non-stretched part can typically correspond to the plastic sheet, with the plastic sheet thickness. The non-stretched part can be for example a flange at the periphery of a stretched part. For example the article can be a thermoformed cup, having a body corresponding to a stretched, typically thermoformed, part of a sheet, and flanges at the periphery of the body, corresponding to a non-stretched part of a sheet. Further details about containers are given below.

The article can comprise 2 or 3 layers or more. It can consist of 2 or 3 layers. It can be for example a two-layer material (layer A)-(layer B). It can be a three-layer material (layer A)-(layer B)-(layer C). It can be a three-layer material (first layer A)-(layer B)-(second layer A). First layer A and second layer A can be identical or different. They are preferably identical. The article preferably comprises at least 19% by weight, preferably at least 38% by weight of layer B.

The amounts of the layers by distance along the article thickness can correspond to the following thickness profile:
- layer(s) A: from 10% to 75%,
- layer B: from 25 to 90%,
the total being 100% of the thickness.

In a preferred embodiment the amounts of the layers by distance along the article thickness can correspond to the following thickness profile:
- first layer A: from 5 to 37.5%,
- layer B: from 25 to 90%,
- second layer A: from 5 to 37.5%,
the total being 100% of the thickness.

The amounts of the layers by weight of the layers can be as follow:
- layer(s) A: from 12.4% to 93%,
- layer B: from 19% to 68.4%,
the total being 100% by weight.

In a preferred embodiment the amounts by weight is as follows:
- first layer A: from 6.2% to 46.5%,
- layer B: from 19% to 68.4%,
- second layer A: from 6.2 to 46.5%,
the total being 100% by weight.

### Polylactic Acid

Polylactic Acid (PLA) polymers are known by the one skilled in the art and are commercially available. These are typically obtained by polymerization of lactic acid monomers. The lactic acid monomer is typically obtained by a micro-biological process, involving micro-organisms such as bacteria.

### Microspheres

Material B comprises expanded microspheres. The expanded microspheres are obtained by expanding expandable microspheres.

Expandable microspheres are known by the one skilled in the art and are commercially available. Such microspheres have a polymeric shell, typically a thermoplastic shell, and a gas in the shell that can expand upon heating. Upon heating the gas pressure increases inside the shell, and the shell expands. The gas pressure can increase at a first temperature, and the shell can expand at a second higher temperature, at which it can undergo a transition from fragile to ductile. Typically the second temperature is higher than the glass transition temperature of the polymer of the shell, and below the melting temperature of this polymer. The heating temperature can be for example of from 80°C to 250°C, preferably from 150°C to 250°, preferably from 150°C to 200°C.

Appropriate gases include for example alkanes such as isopentane. The microspheres preferably have a shell which can be a thermoplastic shell made of ethylenically unsaturated monomers comprising acrylonitrile. The microspheres can have for example a mean particle size of 5 to 20 µm before expansion, and can expand for example to a mean particle size to from 20 µm to 200 µm. The volume expansion can be for example of from 8 to 500, for example from 10 to 100. Examples of appropriate polymers, shells, microspheres and/or processes for making the same are given in documents WO201072663, WO2009153225, WO2007142593, WO2007091961, WO2007073318, WO2006068574, WO2006068573, WO2004113613, WO2004072160, WO2004056549, WO200183100, WO200145940, WO200107154, and WO9324581.

Useful expandable microspheres include products marketed as Expancel® by Akzo Nobel and/or Eka Chemicals. In one embodiment one can use grades that are compatible with a food contact.

The expandable microspheres can be in the form of a masterbatch, wherein the microspheres are dispersed in a polymeric matrix, typically a thermoplastic matrix, for example PLA, or a polymer of ethylenically unsaturated monomers, such as an ethylene vinyl acetate copolymer. The matrix does not qualify herein as an additive. Such masterbatches can comprise for example from 5% to 90% by weight of polymeric matrix, preferably from 10% to 60%. Such masterbatches can comprise further additives, for example additives detailed below. In a particular embodiment the masterbatch, beyond the matrix and the microspheres is free from further impact modifiers, snapability modifiers and/or fillers.

Upon heating, the density of the microspheres and/or of the masterbatch increases from an initial value to a final value. This might depend on the gas, the amount thereof in the shell, on the composition of the shell, and on the temperature. One can select microspheres accordingly to obtain the desired material with the desired density, for example with using reported bulk densities and height of foaming information.

In a preferred embodiment the foamed polylactic acid material (Material B) has a density of from 0.5 to 1.2, preferably from 0.75 to 1.1. The microspheres and the amount thereof can be selected thereto. In a preferred embodiment the foamed polylactic acid material (Material B) comprises from 0.1 to 5% by weight, preferably from 1% to 4% of expanded microspheres. In a preferred embodiment the article (including all the layers) has a density of from 0.75 to 1.2, preferably from 0.75 to lower than 1.2 or to lower than 1.0. The microspheres, the amount thereof, layer(s) A, optionally further layers, and the compositions of the layers can be selected thereto.

### Additives

Additives in Material A and/or Material B, if present, can be identical or different. Additives that can be used include for example:
- impact modifiers,
- snapability modifiers,
- fillers
- aspect modifiers, such as pigments or colorants,
- stabilizers,
- lubricants,
- mixtures or association thereof.

It is mentioned that some additives can provide several functions such as modifying impact properties and snapability.

Addtives that can be used in PLA are known be the one skilled in the art. Examples include alkyl sulfonates, aromatic-aliphatic polyesters, poly(butylene adipate-co-terephtalate), for example those described in document EP 2065435, fatty acids or salts thereof, such a glycerin monostearate, ethylene copolymers, for example described in document WO 2011119639, and TiO2 pigments, for example described in document WO 2011119639.

The additives can be added in the form of masterbatches, wherein the additive is dispersed in a polymer matrix, for example PLA or a polymer of ethylenically unsaturated monomers, such as an ethylene vinyl acetate copolymer.

Additives if present in material A and/or material B can be typically present in an amount of 0.1 % to 15% by weight, for example in an amount of 1 % to 10% by weight.

### Containers

The article can be a container, for example a container used as a dairy product container, like a yogurt cup. The invention also concerns the container filled with a food product, preferably a dairy product, preferably a milk-based (milk being an animal milk or a vegetal milk substitute such as soy milk or rice milk etc....) product, preferably a fermented dairy product, for example a yogurt. The container can have a yogurt cup shape, for example with a square cross section or a square with rounded corners cross section, or round cross section. The container can have a tapered bottom, preferably a tapered rounded bottom. The container has walls (perpendicular to the cross section) that can be provided with elements such as stickers or banderoles. Elements such as banderoles can contribute to reinforcing the mechanical resistance of the container. The container can be for example a container of 50 ml (or 50 g), to 1 L (or 1 kg), for example a container of 50 ml (or 50 g) to 80 ml (or 80 g), or 80 ml (or 80 g) to 100 ml (or 100g), or 100 ml (or 100 g) to 125 ml (or 125 g), or 125 ml (or 125 g) to 150 ml (or 150 g), or 150 ml (or 150 g) to 200 ml (or 200 g), or 250 ml (or 250 g) to 300 ml (or 300 g), or 300 ml (or 300 g) to 500 ml (or 500 g), or 500 ml (or 500 g) to 750 ml (or 750 g), or 750 ml (or 750 g) to 1 L (or 1 kg).

### Process

The article can be prepared by any appropriate process. Material A and/or Material B can be prepared before forming the article or during the formation of the article. Thermoplastic materials, such as PLA, can be introduced in the form of powder, pellets or granules.

If material A is a mixture of several ingredients, these ingredients can be mixed upon forming the article, typically in an extruder. One can implement masterbatches of additives to be mixed with a thermoplastic material. In another embodiment one can use pre-mixed compounds typically in the form of powder, pellets or granules.

Material B is a mixture of microspheres and polylactic acid. These ingredients can be mixed upon forming the article, typically in an extruder. One can implement masterbatches of microspheres and optionally other additives, or even several masterbatches, to be mixed with polylactic acid. In another embodiment one can use pre-mixed compounds in the form of powder, pellets or granules. Useful processes typically include a step of mixing polylactic acid and expandable microspheres, and a step of heating to expand the microspheres. The heating temperature can be for example of from 150°C to 250°C, preferably from 150°C to 200°C. Heating can be performed during the mixing step or in a further step. Mixing and/or heating can be performed in an extruder, in an extrusion step. Heating is typically performed during an extrusion step to form layer B.

In a preferred embodiment layer A and layer B are co-extruded, typically from Material A and Material B flows in a molten form. Co-extrusion processes are known from the one skilled in the art. These typically involve extruding separates flows through separates side by side dies. Beyond the dies the flows merge and form at least one interface. There is one interface for two-layer articles and two interfaces for three-layer articles. The materials are then cooled to form a solid article. One can implement appropriate treatments after the co-extrusion in order to obtain the desired product, for example a sheet or a film. Treatment steps are for example press treatments, calendering, stretching etc... Parameters of these treatment steps such as temperatures, pressure, speed, number of treatments can be adapted to obtain the desired product, for example a sheet. In one embodiment the article is a sheet prepared by a process involving co-extruding and calendering.

In one embodiment the article is a thermoformed container obtained from a plastic sheet. The thermoformed article is preferably obtained by:
1) co-extruding at least layer A and layer B to obtain a multilayer plastic sheet, and
2) thermoforming the plastic sheet to obtain a container.

Thermoforming is a known operation. One can thermoform the sheet so as to obtain the final product of the desired shape. It is mentioned that some stretching occurs upon thermoforming. Thermoforming may be for example performed thanks to a Form Fill Seal thermoforming line. The thermoforming can present the following steps:
- sheet introduction on guide chains (i.e. spike or jaws);
- sheet heating, by heating contact plates;
- forming thanks to a negative mould, assisted by forming plugs and air pressure. The mould may comprise or not a label.

In a Form Fill Seal thermoforming line, one typically performs the following steps after the thermoforming:
- the resulting forms are filled with a product, and then, thermosealed with a lid film,
- finally, they are cutted and optionally precutted by mechanical trimming tool.

Further details or advantages of the invention might appear in the following non limitative examples.

### Examples

The examples are implemented with using the following materials:
- Masterbatch: Expancel® FG92 MBX 120 marketed by Eka Chemicals AB (Akzo Nobel NV subsidiary).
- PLA: Ingeo®2003D marketed by NatureWorks
- Additive: impact modifier

### Example 1 - Plastic sheet

A three-layer plastic sheet is prepared according to the procedure below.

### Procedure:

The multilayer structure is produced by co-extrusion. The internal foamed PLA layer is extruded with a Fairex extruder having an internal diameter of 45 mm and a 24D length. The two external compact layers are extruded with one Scannex extruder having an internal diameter of 30 mm and a 26D length. The obtained molten PLA is then separated in two different flows in the feedblock to form the external compact layers. In both extruders, the temperature along the screw is comprised between 165 and 195°C. After the extruders, the different PLA flows are fed into feedblock channels through different passages separated by two thin planes (die). At the end of the separation planes, the three flows merge and form two interfaces, and the sheet is extruded through a die with temperature comprised between 185 and 195°C. The sheet is then calendered on 3 rolls that get a temperature of 40°C. The pressure between the first and second calendar roll is maintained to zero to stabilize the foam structure and to avoid any collapsing of the microsphere bubbles.

The layered sheet has the following layers composition (contents are provided by weight):

| Layer | Layer repartition along sheet thickness (by distance) | Layer repartition along sheet thickness (by weight) | PLA Content | Masterbatch Content | Additive Content |
|---|---|---|---|---|---|
| Compact layer | 25% | 31% | 98% | / | 2% |
| Foamed Layer | 50% | 38% | 97.4% | 2.6% | |
| Compact layer | 25% | 31% | 98% | / | 2% |

### Evaluations

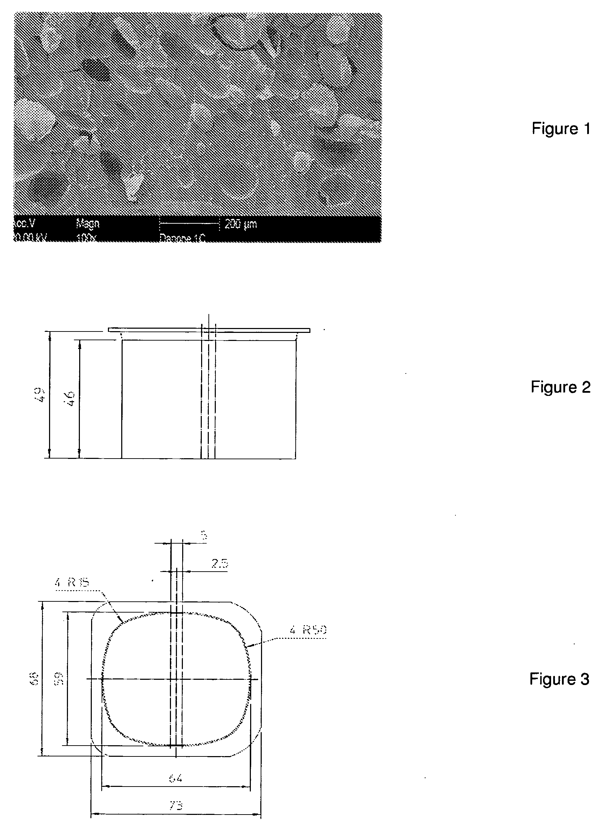

No significant decrease in the foamed PLA viscosity (compared to non-foamed PLA) is observed during extrusion, attesting that the microspheres do not degrade PLA. As a consequence, the foamed and compact PLA have almost the same viscosities, facilitating the merging of the different PLA flows into the feedblock and then extrusion through the die. Moreover, the extrusion flow is stabilized in a short time (3 min), attesting for the efficiency of the microspheres and their simplicity of use.
The overall thickness of the sheet is 750 µm. The layer repartition of the multilayer structure is confirmed (25% compact/50% foamed/25% compact) by optical microscopy. A SEM (scanning electronic microscopy) picture of the foamed PLA layer is presented on figure 1. The microspheres are easily seen on this picture, attesting for the PLA to be foamed.

The density of the sheet is determined by gravimetric measurements and is equal to 0.97. This result attests for a density drop of 22.4%, compared to PLA raw material.

The obtained sheet is referred to as "PLA foam".

### Example 2 - Yogurt cups

The plastic sheet of example 1 is thermoformed into yogurt cups according to the procedure below.

### Procedure:

The sheet is introduced into a F.F.S. thermoforming line and is then transformed with the following parameters:
- Heating plates temperatures: 95°C;
- The sheet is gradually heated thanks to six heating steps, each of the heating boxes having a closing time of 140ms;
- The thermoforming step is performed with conventional felt forming plugs;
- Mold temperature is fixed at 45°C to activate the label hot melt and to cool down the PLA material;
- Forming air pressure: 5 bars;
- Machine speed: 28 strokes per minute.

The shape and dimensions (in mm) of the yogurt cups are provided in figure 2 and figure 3. The yogurt cups are cut into x4 attached cup (referred to as "multipack"), with a precut line between each of the 4 cups. The precut lines are performed on the F.F.S. equipment. Various depth are implemented and controlled by operators.

### Evaluations:

- The yogurt cup mechanical performances are determined by compression tests referred as Top Load. The Top Load value is evaluated according to the following protocol:
   - Use of a tensile/compression test machine type ADAMEL LHOMARGY DY 34
   - Apply compression on cups (by 4 cups) with a speed of 10mm/min at ambient temperature
   - Evaluate top load value as: maximum of compression curve and take value of force for 3mm of displacement.
- The depth of the precut line is measured by optical miscroscopy with at least 3 measurements.
- The snapability is determined by hand measurements with a marking scale that represents the ability of the cups to be separated under flexural solicitation:
   - Mark 0 - Do not break in three solicitations or do not follow the precut line;
   - Mark 1 - Break in three solicitations and follow precut line
   - Mark 3 - Break in two solicitations and follow precut line;
   - Mark 5 - Break in one solicitation and follow precut line.
- Then, the snapability is compared to the precut depth to determine the minimum precut depth required to obtain a good Snapability.

Results the evaluations are provided below:

### Results:

- No residual brittleness is observed during sheet introduction into the F.F.S. thermoforming line. No issue were reported concerning the thermoforming step, the thickness profile being close to the one obtained with PLA raw material (referred to as "compact"), which is known to be easily transformed through thermoforming.
- The snapability mark of the obtained multipacks is close to 5 attesting that, no snap additive is further required into the expanded layer. The depth of the precut line is between 416 µm and 449 µm.
- The mechanical performances of the cup are determined from compression measurements:
   - Top load at 3 mm = 58.2 ± 5.1 daN
   - Top load at maximum = 90.6 ± 3.6 daN
These top load performances are in line with performances required with conventional materials such as compact polystyrene.

## Claims

1. An article comprising a multilayer plastic material comprising at least:
A) one layer A of a thermoplastic material different from foamed polylactic acid,
B) one layer B of a foamed polylactic acid material comprising polylactic acid and expanded microspheres.

2. An article according to claim 1, wherein the microspheres have a thermoplastic shell made of ethylenically unsaturated monomers comprising acrylonitrile.

3. An article according to any of the preceding claims, wherein the foamed polylactic acid material has a density of from 0.5 to 1.2, preferably from 0.75 to 1.1.

4. An article according to any of the preceding claims, having a density of from 0.75 to 1.2.

5. An article according to any of the preceding claims, wherein the foamed polylactic acid material comprises from 0.1 to 5% by weight of expanded microspheres.

6. An article according to any of the preceding claims, wherein the polylactic acid material comprises from 0% to 0.15% by weight, preferably from 0% to 0.1% of cross-linking agents.

7. An article according to any of the preceding claims, wherein layer A is of non-foamed polylactic acid.

8. An article according to any of the preceding claims, comprising at least 19% by weight, preferably at least 38% by weight of layer B.

9. An article according to any of the preceding claims, being a three-layer material (first layer A)-(layer B)-(second layer A).

10. An article according to claim 9, wherein the amounts of the layers by distance along the article thickness correspond to the following profile:
- first layer A: from 5 to 37.5%,
- layer B: from 25 to 90%,
- second layer A: from 5 to 37.5%,
the total being 100% of the thickness.

11. An article according to any of the preceding claims, being a plastic sheet.

12. An article according to claim 11, wherein the plastic sheet has a thickness of from 0.5 mm to 2 mm, preferably from 0.6 to 1 mm.

13. An article according to any of claims 1 to 10, being a container.

14. An article according to claim 13, wherein the container is a thermoformed article, preferably obtained from a plastic sheet article according to any of claims 11 or 12.

15. An article according to any of claims 13 or 14, being a thermoformed cup.

16. A process of making an article according to any of the preceding claims, comprising a step of mixing polylactic acid and expandable microspheres, and a step of heating to expand the microspheres.

17. A process according to claim 16, wherein heating is performed at a temperature of from 150 to 250 °C.

18. A process according to any of claims 16 to 17, wherein heating is performed during an extrusion step to form layer B.

19. A process according to any of claims 16 to 18, wherein at least layer A and layer B are co-extruded.

20. A process according to any of claims 16 to 19, wherein the article is a thermoformed container obtained by:
1) co-extruding at least layer A and layer B to obtain a multilayer plastic sheet, and
2) thermoforming the plastic sheet to obtain a container.

## Patentansprüche

1. Gegenstand, umfassend ein Multischicht-Plastikmaterial, umfassend mindestens:
A) Eine Schicht A eines thermoplastischen Materials, das unterschiedlich von geschäumter Polymilchsäure ist,
B) Eine Schicht B eines geschäumten Polymilchsäurematerials, umfassend Polymilchsäure und ausgedehnte Mikrokügelchen.

2. Gegenstand nach Anspruch 1, wobei die Mikrokügelchen eine thermoplastische Hülle aufweisen, die aus ethylenischen ungesättigten Monomeren, umfassend Acrylnitril, gemacht ist.

3. Gegenstand nach einem der vorhergehenden Ansprüche, wobei das geschäumte Polymilchsäurematerial eine Dichte von 0,5 bis 1,2, bevorzugt von 0,75 bis 1,1, aufweist.

4. Gegenstand nach einem der vorhergehenden Ansprüche, der eine Dichte von 0,75 bis 1,2 aufweist.

5. Gegenstand nach einem der vorhergehenden Ansprüche, wobei das geschäumte Polymilchsäurematerial von 0,1 bis 5 Gewichts-% ausgedehnte Mikrokügelchen umfasst.

6. Gegenstand nach einem der vorhergehenden Ansprüche, wobei das Polymilchsäurematerial von 0 Gewichts-% bis 0,15 Gewichts-%, bevorzugt 0 % bis 0,1%, Vernetzungsmittel umfasst.

7. Gegenstand nach einem der vorhergehenden Ansprüche, wobei Schicht A aus nicht-geschäumter Polymilchsäure ist.

8. Gegenstand nach einem der vorhergehenden Ansprüche, umfassend mindestens 19 Gewichts-%, bevorzugt mindestens 38 Gewichts-%, von Schicht B.

9. Gegenstand nach einem der vorhergehenden Ansprüche, die ein Drei-Schicht-Material (erste Schicht A)-(Schicht B)-(zweite Schicht A) ist.

10. Gegenstand nach Anspruch 9, wobei die Anteile der Schichten, hinsichtlich Distanz entlang der Dicke des Gegenstands, dem folgenden Profil entspricht:
- Erste Schicht A: von 5 bis 37,5%,
- Schicht B: von 25 bis 90%,
- Zweite Schicht A: von 5 bis 37,5%,
wobei die Gesamtsumme 100% der Dicke beträgt.

11. Gegenstand nach einem der vorhergehenden Ansprüche, der eine Plastikplatte ist.

12. Gegenstand nach Anspruch 11, wobei die Plastikplatte eine Dicke von 0,5 mm bis 2 mm, bevorzugt von 0,6 bis 1 mm, aufweist.

13. Gegenstand nach einem der Ansprüche 1 bis 10, der ein Behälter ist.

14. Gegenstand nach Anspruch 13, wobei der Behälter ein thermogeformter Gegenstand ist, bevorzugt erhalten aus einem Plastikplattengegenstand nach einem der Ansprüche 11 oder 12.

15. Gegenstand nach einem der Ansprüche 13 oder 14, der ein thermogeformter Becher ist.

16. Verfahren zum Herstellen eines Gegenstands nach einem der vorhergehenden Ansprüche, umfassend einen Schritt des Mischens von Polymilchsäure und ausdehnbaren Mikrokügelchen und einen Schritt des Erwärmens, um die Mikrokügelchen auszudehnen.

17. Verfahren nach Anspruch 16, wobei Erwärmen bei einer Temperatur von 150 bis 250 °C durchgeführt wird.

18. Verfahren nach einem der Ansprüche 16 bis 17, wobei Erwärmen während eines Extrusionsschritts durchgeführt wird, um Schicht B zu bilden.

19. Verfahren nach einem der Ansprüche 16 bis 18, wobei mindestens Schicht A und Schicht B co-extrudiert werden.

20. Verfahren nach einem der Ansprüche 16 bis 19, wobei der Gegenstand ein thermogeformter Behälter ist, erhältlich durch:
1) Co-Extrudieren von mindestens Schicht A und Schicht B, um eine Multischicht-Plastikplatte zu erhalten, und
2) Thermoformen der Plastikplatte, um einen Behälter zu erhalten.

## Revendications

1. Article comprenant une matière plastique multicouche comprenant au moins :
A) une couche A d'une matière thermoplastique différente d'un poly(acide lactique) en mousse,
B) une couche B d'une matière de type poly(acide lactique) en mousse comprenant du poly(acide lactique) et des microsphères expansées.

2. Article selon la revendication 1, dans lequel les microsphères ont une enveloppe thermoplastique faite de monomères à insaturation éthylénique comprenant de l'acrylonitrile.

3. Article selon l'une quelconque des revendications précédentes, dans lequel la matière de type poly(acide lactique) en mousse a une densité de 0,5 à 1,2, de préférence de 0,75 à 1,1.

4. Article selon l'une quelconque des revendications précédentes, ayant une densité de 0,75 à 1,2.

5. Article selon l'une quelconque des revendications précédentes, dans lequel la matière de type poly(acide lactique) en mousse comprend de 0,1 à 5 % en poids de microsphères expansées.

6. Article selon l'une quelconque des revendications précédentes, dans lequel la matière de type poly(acide lactique) comprend de 0 % à 0,15 % en poids, de préférence de 0 % à 0,1 % d'agents de réticulation.

7. Article selon l'une quelconque des revendications précédentes, dans lequel la couche A est constituée de poly(acide lactique) non en mousse.

8. Article selon l'une quelconque des revendications précédentes, comprenant au moins 19 % en poids, de préférence au moins 38 % en poids de couche B.

9. Article selon l'une quelconque des revendications précédentes, qui est une matière à trois couches (première couche A) - (couche B) - (seconde couche A).

10. Article selon la revendication 9, dans lequel les quantités des couches sur l'épaisseur de l'article correspondent au profil suivant :
- première couche A : de 5 à 37,5 %,
- couche B : de 25 à 90 %,
- seconde couche A : de 5 à 37,5 %,
le total étant égal à 100 % de l'épaisseur.

11. Article selon l'une quelconque des revendications précédentes, qui est une feuille plastique.

12. Article selon la revendication 11, dans lequel la feuille plastique a une épaisseur de 0,5 mm à 2 mm, de préférence de 0,6 à 1 mm.

13. Article selon l'une quelconque des revendications 1 à 10, qui est un récipient.

14. Article selon la revendication 13, dans lequel le récipient est un article thermoformé, de préférence obtenu à partir d'un article en feuille plastique selon l'une quelconque des revendications 11 ou 12.

15. Article selon l'une quelconque des revendications 13 ou 14, qui est une coupelle thermoformée.

16. Procédé de fabrication d'un article selon l'une quelconque des revendications précédentes, comprenant une étape de mélange de poly(acide lactique) et de microsphères expansibles, et une étape de chauffage pour dilater les microsphères.

17. Procédé selon la revendication 16, dans lequel le chauffage est réalisé à une température de 150 à 250 °C.

18. Procédé selon l'une quelconque des revendications 16 à 17, dans lequel le chauffage est réalisé pendant une étape d'extrusion pour former la couche B.

19. Procédé selon l'une quelconque des revendications 16 à 18, dans lequel au moins une couche A et une couche B sont co-extrudées.

20. Procédé selon l'une quelconque des revendications 16 à 19, dans lequel l'article est un récipient thermoformé obtenu par :
1) co-extrusion d'au moins une couche A et d'une couche B pour donner une feuille plastique multicouche, et
2) thermoformage de la feuille plastique pour donner un récipient.
